# EUROPEAN PATENT APPLICATION

(11) **EP 3 409 587 A1**
(43) Date of publication of application: **05.12.2018**
(21) Application number: 18174464.0
(22) Date of filing: 27.05.2018
(51) Int. Cl.: B64C 29/00

(54) **SIMPLE PITCH CONTROL DEVICE FOR DUAL-MODE AIRCRAFT WITH VTOL AND FIXED-WING FLIGHT**

(30) Priority: 31.05.2017 TW 106117870
(71) Applicant: TopAero Inc., 94641 Pingtung County (TW)
(72) Inventor: Chiang, Hsun-Yin, 970 Hualien County (TW)
(74) Representative: Lang, Christian

(57) **Abstract**

An aircraft includes a fuselage (1) and a pair of symmetric fixed wings (10). The fuselage includes a head (11A) and a tail (11B) spaced from the head along a longitudinal axis (X). Each fixed wing extends along a lateral axis (Y). The fuselage further includes a top (12A) and a bottom (12B) spaced from the top along a vertical axis (Z). Each symmetric fixed wing includes a first propelling mechanism (13) mounted thereto. Each first propelling mechanism is operable to pitch about the lateral axis together with one of the symmetric fixed wings or to pitch independently about the lateral axis. A simple control device (14) is mounted along the longitudinal axis between a center of gravity (P) of the fuselage and the tail and is configured to generate a resistance to a torque between the center of gravity of the fuselage and the head. The simple control device is selectively operable to generate an upward or downward control torque.

## Description

### BACKGROUND OF THE INVENTION

The present invention relates to an aircraft and, more particularly, to a simple pitch control device for a dual-mode aircraft with vertical takeoff and landing (VTOL) and fixed-wing flight.

Conventional aircrafts include rotorcraft type aircrafts and fixed-wing aircrafts according to the functions and the flying principles. Rotorcraft type aircrafts can proceed with vertical takeoff and landing, sustentation, low-speed forward flight, rearward flight, left/right movement, and hovering, like a helicopter, whereas conventional fixed-wing aircrafts provide features of high speed, more economical fuel consumption, and farther ranges.

Furthermore, there are hybrid aircrafts between the above two types of aircrafts. For example, a tiltrotor aircraft includes rotors and a pair of fixed wings. The pair of fixed wings is disposed along a lateral axis of a fuselage of the aircraft. A rotor is disposed on each of two sides of the pair of fixed wings. Each rotor can pitch about the lateral axis. When the rotors operate in the vertical direction (parallel to the vertical axis) like a helicopter with two rotors, helicopter performance can be achieved. When the rotors tilt to the horizontal position (parallel to the longitudinal axis), the aircraft is similar to an ordinary fixed-wing type aircraft and provides a faster speed and a farther range. V-22 Osprey Tiltrotor Aircraft is a representative example of such an aircraft.

A tilt wing aircraft has an outline almost identical to an ordinary fixed wing aircraft, except that the main wing can tilt 90°, and a rotor system is provided on the tail to balance the lift. When the main wing tilts to the vertical direction (parallel to the vertical axis) and operates, operational characteristics similar to a helicopter can be obtained through control of each flight control surfaces, the main rotor system, and the tail rotor system. When the main wing tilts to the horizontal position (parallel to the longitudinal axis), the flight mode is identical to an ordinary fixed wing (the tail rotor system is in a disabled state). XC-142 experimental aircraft designed by NASA and Canadair CL-84 (Canada) are representative examples of such a tilt wing aircraft.

U.S. Patent No. 2,702,168 discloses a convertible aircraft including two rotors (first propelling mechanisms) for generating propelling forces are disposed on two sides of a pair of fixed wings. Such a rotor system has a complicated cyclic control for controlling pitch, yaw, and roll, such that the pitch about the lateral axis can be controlled at the twin rotor system disposed along the lateral axis. However, the complicated cyclic control is expensive and is difficult to maintain. Due to the factors of costs and practical technology, only V-22 Osprey tiltrotor aircraft series adopt the above control and have been successfully mass produced after years of research. Difficulties still exist in implementation and popularization of the above control.

Other attempts in getting rid of complicated cyclic control include disposition of a fixed pitch or variable pitch propeller on a tail of the aircraft to control the pitch. However, these attempts all end in failure due to unsatisfactory designs.

U.S. Patent No. 3,572,612A discloses a programming and mixing unit for a VTOL aircraft. A twin rotor coaxial propeller (namely, a tail propeller) is disposed on the tail to generate a lift in the vertical direction. U.S. Patent No. 3,141,633A discloses a tilt-wing aircraft including a fan disposed at a tail thereof. However, both the tail propelling system and the tail fan withstand the torque resulting from its own weight behind the center of gravity of the aircraft towards the tail. Thus, only a single lift for lifting the tail upward is generated.

In these two patents, when the aircraft is proceeding with control of nose up about the lateral axis, it can only be achieved by reducing the torque generated by the tail lift device. Nevertheless, if the lifting torque of the tail lift device is reduced to the minimum or even zero but still cannot fulfill the above operation, the torque of the main lift device in front of the center of gravity must be increased. However, the torque generated by the main lift device is far greater than the torqued generated by the tail lift device, the pitch movement of the aircraft tends to incur divergent oscillation, leading to lose control and crash of the aircraft. This occurs easily when the aircraft is in a vertical high descent rate steep approach. Thus, NASA XC-142 and Canadair CL-84 having similar designs are merely at the prototype experimental stage and never been mass produced.

Thus, one of the problems encountered by those type of aircrafts with VTOL flight mode is the out-of-control state of pitch about the lateral axis during the VTOL procedure.

### BRIEF SUMMARY OF THE INVENTION

An aircraft according to the present invention includes a fuselage and a pair of symmetric fixed wings. The fuselage includes a head and a tail spaced from the head along a longitudinal axis. Each of the pair of symmetric fixed wings extends along a lateral axis perpendicular to the longitudinal axis. The fuselage further includes a top and a bottom spaced from the top along a vertical axis perpendicular to the longitudinal axis and the lateral axis. Each of the pair of symmetric fixed wings includes a first propelling mechanism mounted thereto. Each first propelling mechanism is operable to pitch about the lateral axis together with one of the pair of symmetric fixed wings or to pitch independently about the lateral axis. A simple control device is mounted along the longitudinal axis between a center of gravity of the fuselage and the tail. The simple control device is configured to generate a resistance to a torque between the center of gravity of the fuselage and the head. The simple control device is selectively operable to generate an upward or downward control torque.

The present invention uses a simple pitch control device for a dual-mode aircraft with vertical takeoff and landing (VTOL) and fixed-wing flight, particularly an aircraft including a pair of fixed wings, with two first propelling mechanisms respectively mounted to the pair of fixed wings. The aircraft in a rotorcraft mode can use the lift of each propelling mechanism to achieve vertical takeoff and landing. When switched to the fixed-wing flight mode, the aircraft can proceed with continuous flight like an ordinary fixed-wing aircraft.

The simple control device used herein is compared with an aircraft with complicated and expensive cyclic control. The simple control device of the present invention can be used to generate a bi-directional and adaptable control torque relative to the fuselage along the longitudinal axis while pitching about the lateral axis during vertical takeoff and landing, thereby controlling the pitch. This can be achieved by a structure that is more economic, simpler, and more reliable and that has a reduced maintenance costs, which is particularly preferable for a drone not for carrying human passengers.

The present invention will become clearer in light of the following detailed description of illustrative embodiments of this invention described in connection with the drawings.

### DESCRIPTION OF THE DRAWINGS

FIG. 1 is a perspective view of an aircraft of a first embodiment according to the present invention.
FIG. 2 is a top view of the aircraft of FIG. 1.
FIG. 3 is a side view of the aircraft of FIG. 1.
FIG. 3A is an enlarged view of a portion of the aircraft of FIG. 3.
FIG. 3B is a side view illustrating an example of adjustment of an inclination angle of blades of the aircraft of FIG. 1.
FIG. 3C is an enlarged view of a portion of the aircraft of FIG. 3B.
FIG. 3D is a side view illustrating another example of adjustment of an inclination angle of blades of the aircraft of FIG. 1.
FIG. 3E is an enlarged view of a portion of the aircraft of FIG. 3D.
FIG. 4 is a side view of an aircraft of a second embodiment according to the present invention.
FIG. 4A is an enlarged view of a portion of the aircraft of FIG. 4.
FIG. 5 is a side view of an aircraft of a third embodiment according to the present invention.
FIG. 5A is an enlarged view of a portion of the aircraft of FIG. 4.
FIG. 6 is a diagrammatic side view illustrating a fixed-wing flight mode of the aircraft according to the present invention.
FIG. 7 is a perspective view of an aircraft with another example of first propelling mechanisms.
FIG. 8 is a perspective view of an aircraft with a further example of the first propelling mechanisms.

### DETAILED DESCRIPTION OF THE INVENTION

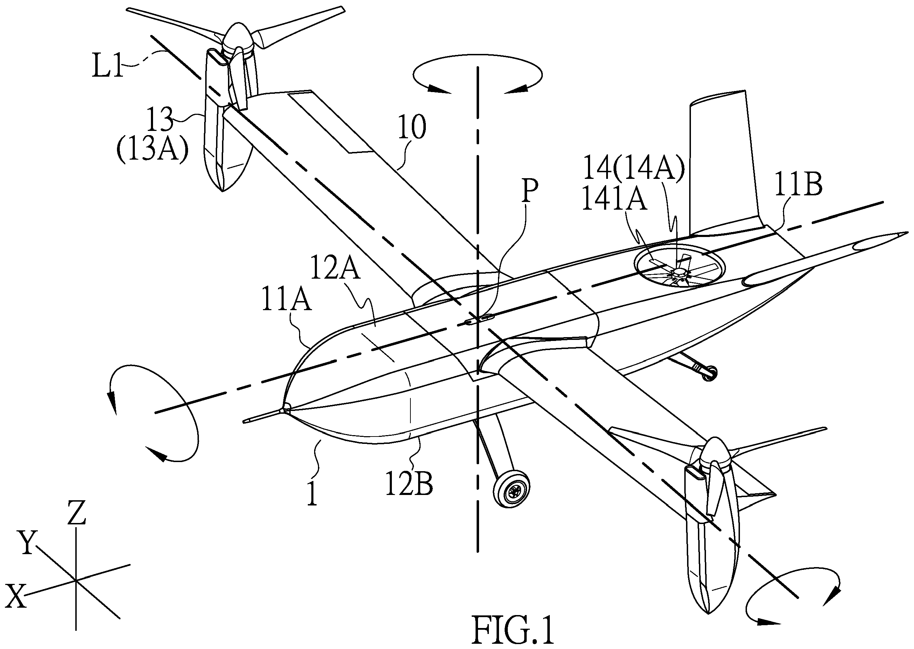

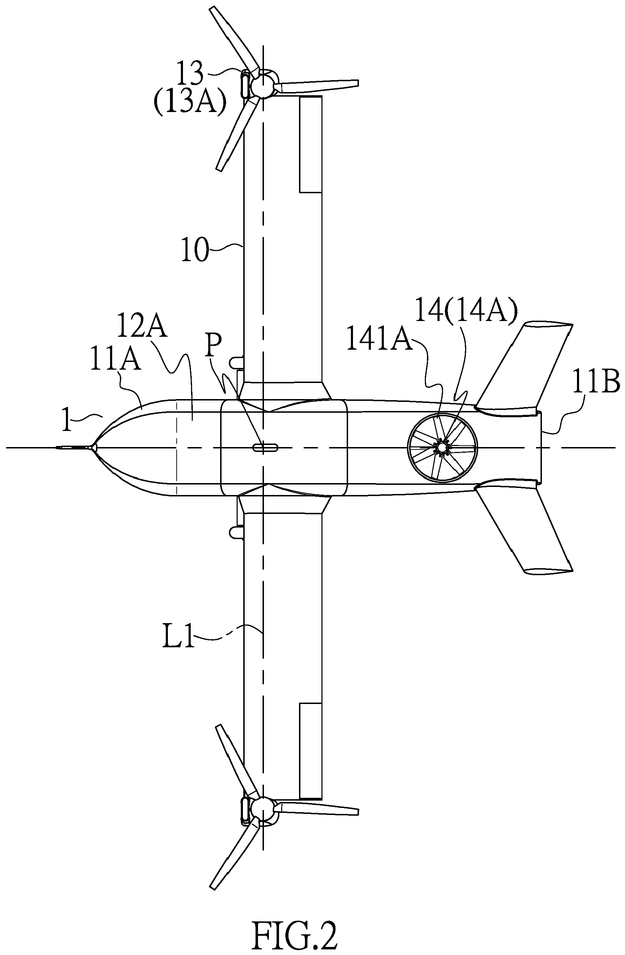

With reference to FIG. 1, the present invention relates to a simple pitch control device for a dual-mode aircraft with vertical takeoff and landing (VTOL) and fixed-wing flight. The aircraft includes a fuselage 1 and a pair of symmetric fixed wings 10. With reference to FIGS. 1 and 2, the fuselage includes a head 11A and a tail 11B spaced from the head 11A along a longitudinal axis X. Each of the pair of symmetric fixed wings 10 extends along a lateral axis Y perpendicular to the longitudinal axis X. The fuselage 1 further includes a top 12A and a bottom 12B spaced from the top 12A along a vertical axis Z perpendicular to the longitudinal axis X and the lateral axis Y.

Each of the pair of symmetric fixed wings 10 includes a first propelling mechanism 13 mounted thereto. Each first propelling mechanism 13 is operable to pitch about the lateral axis Y together with one of the pair of symmetric fixed wings 10 or to pitch independently about the lateral axis Y. Furthermore, a simple control device 14 is mounted along the longitudinal axis X between a center of gravity P of the fuselage 1 and the tail 11B. The simple control device 14 is configured to generate a resistance to a torque between the center of gravity P of the fuselage 1 and the head 11A. The simple control device 14 is selectively operable to generate an upward or downward control torque.

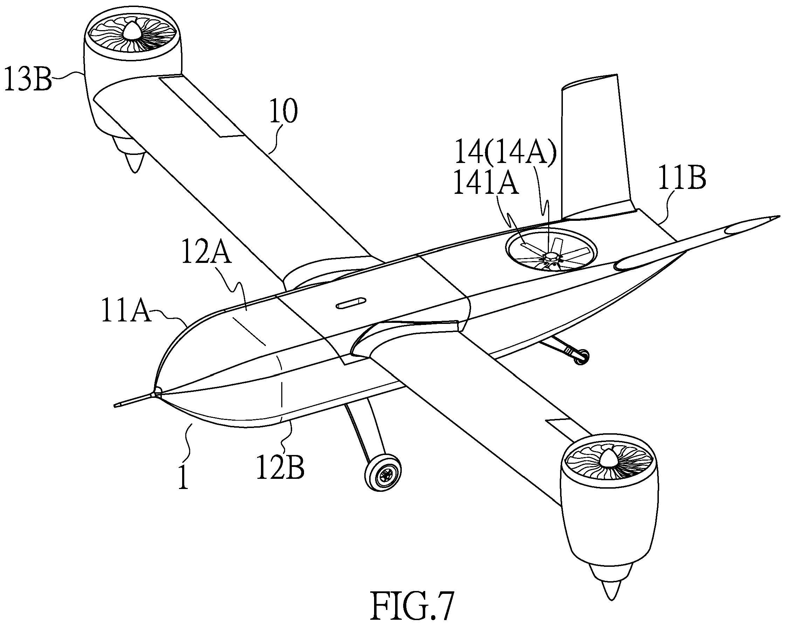

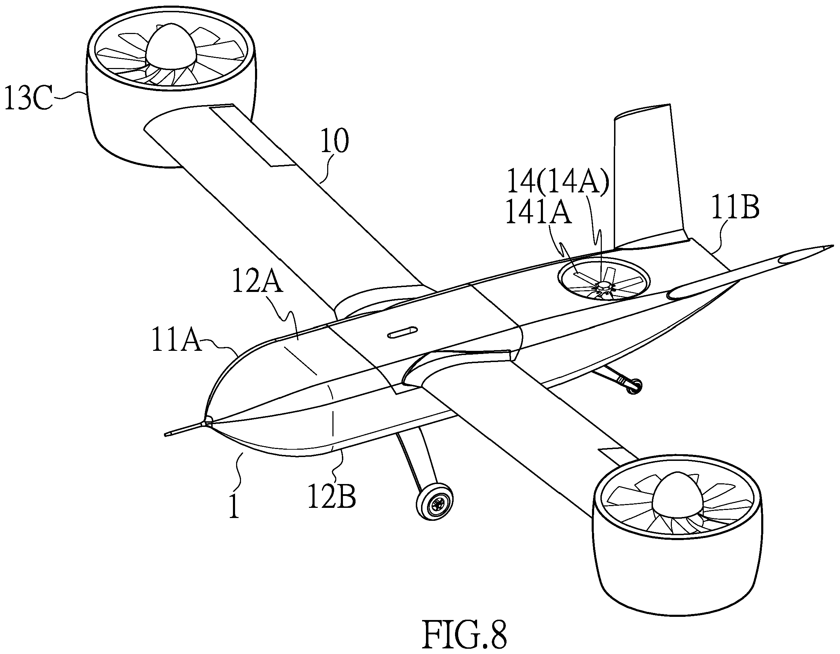

Each first propelling mechanism 13 can be is a rotor 13A shown in FIG. 1, a jet power mechanism 13B shown in FIG. 7, or a ducted fan 13C shown in FIG. 8. Alternatively, each first propelling mechanism 13 can be a propeller, a turbo jet, or a turbo fan. The present invention will be set forth mainly by a non-restrictive example of a rotorcraft type aircraft without limiting the invention.

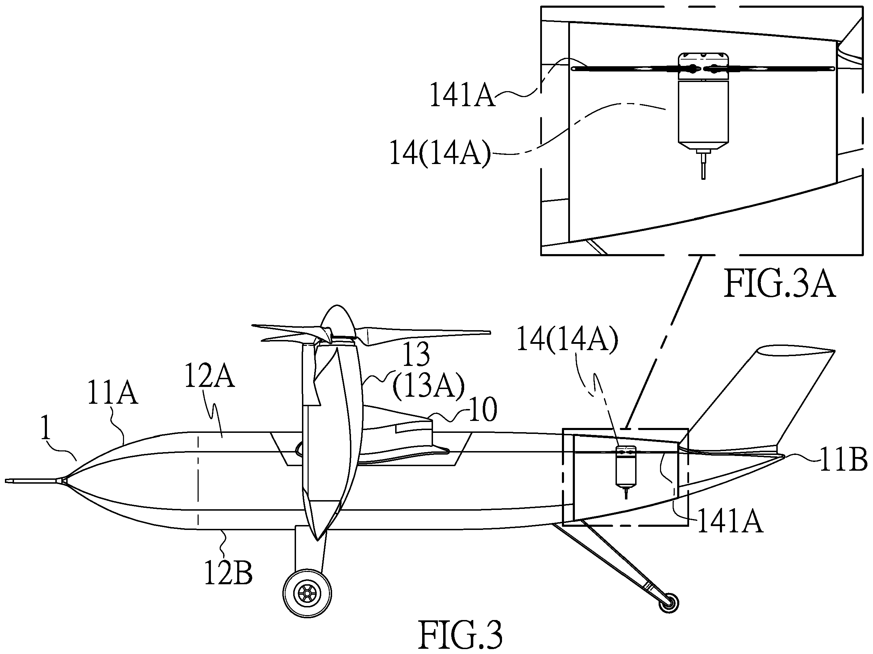

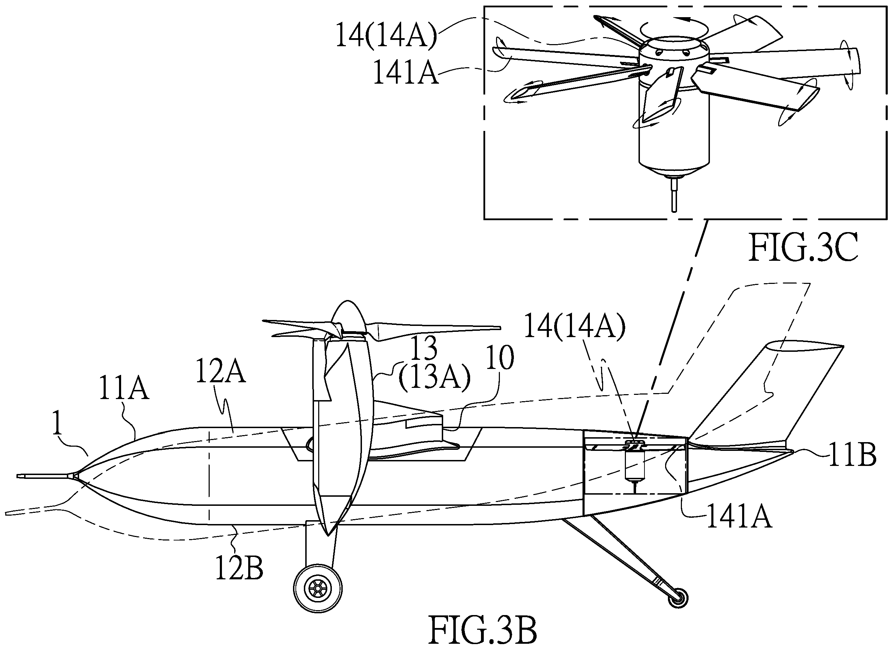

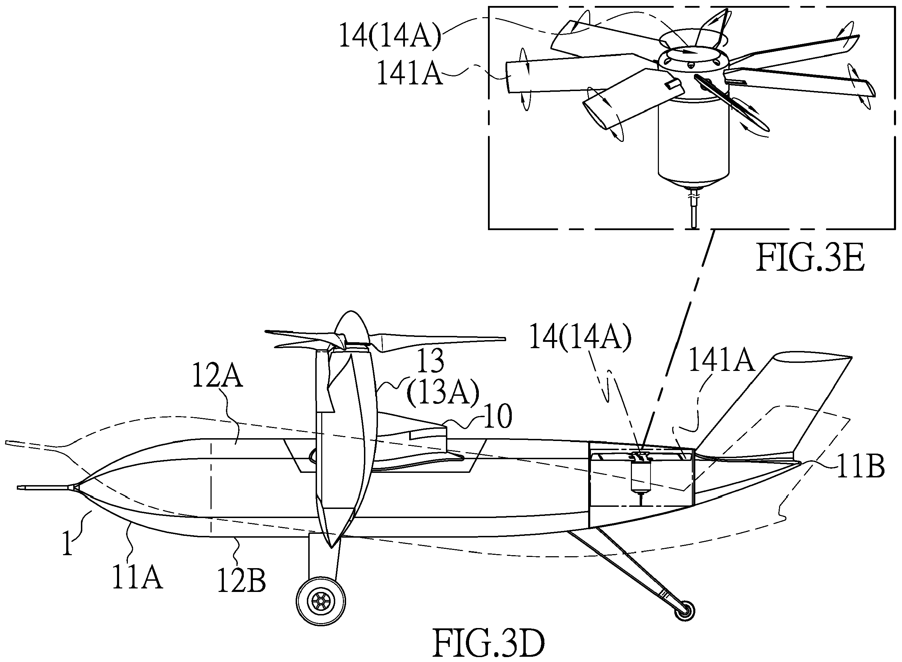

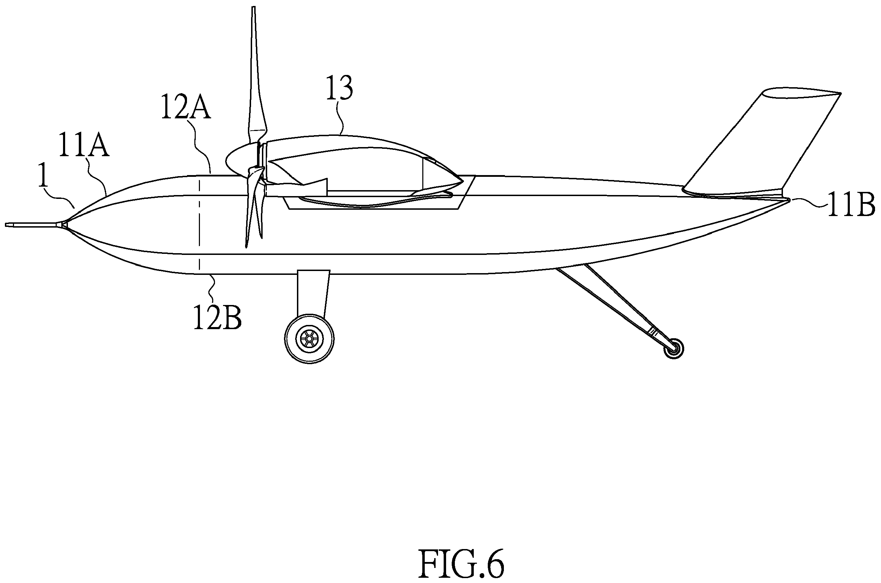

With reference to FIGS. 3, 3A, and 6, the present invention can be used on an aircraft including the fixed wings 10 and rotors 13A. Particularly, for an aircraft including the fixed wings 10 each having a rotor 13A, and the aircraft is not equipped with complicated cyclic control, the present invention uses the simple control device 14 to control the fuselage 10 along the longitudinal axis X to pitch about the lateral axis Y during takeoff and landing, which is preferable for a drone not for carrying human passengers.

With reference to FIG. 2, the center of gravity P of the fuselage 1 is located on an imaginary line L1 passing through propelling centers of the first propelling mechanisms 13 in the vertical takeoff and landing mode.

Alternatively, each of the pair of symmetric fixed wings 10 can further include a second propelling mechanism mounted thereto. The center of gravity P of the fuselage 10 is located on an imaginary line passing through overall propelling centers of the first propelling mechanism 13 and the second propelling mechanisms in the vertical takeoff and landing mode.

The simple control device 14 is embedded in a longitudinal portion of the fuselage 10 adjacent to the tail 11B and is intercommunicated with the outside. By the embedding provision, the simple control device 14 can be received in the fuselage 1 without being protrudent or exposed. This reduces resistance or deviation of the air currents, assuring the stability and reliability of the aircraft after installation of the present invention.

In an example shown in FIGS. 3 and 3A, the simple control device 14 includes an impeller 14A. The impeller 14A can have adjustable blades 141A, as shown in FIGS. 3B, 3C, 3D, and 3E. The adjustable blades 141A are adjustable in angle to generate an upward repulsive force or a downward repulsive force. The adjustable blades 141A can be but not limited to of a conventional design. By simply changing the angle of the blades 141A, the air driving direction can be changed. The mechanism for changing the angle of the blades 141A is conventional and therefore not described and illustrated.

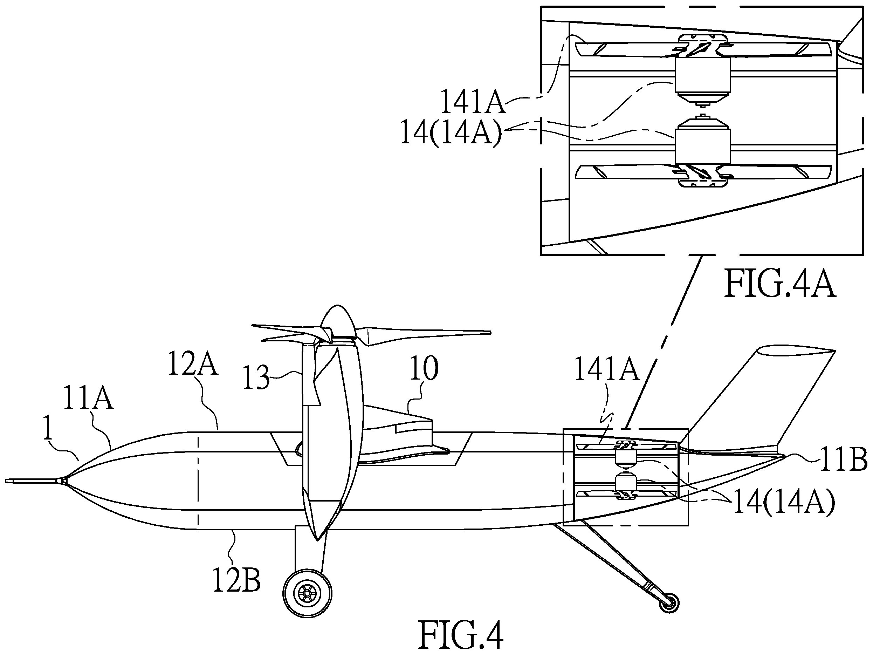

In another example shown in FIGS. 4 and 4A, the simple control device 14 includes two impellers 14A respectively generating an upward repulsive force and a downward repulsive force.

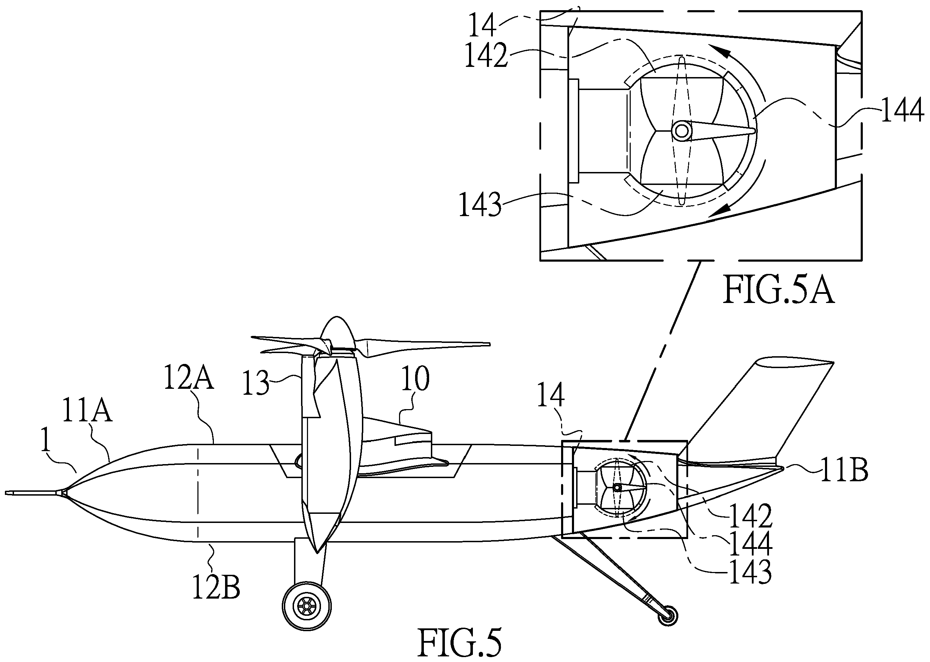

In a further example shown in FIGS. 5 and 5A, the simple control device 14 includes a first nozzle 142 generating an upward repulsive force and a second nozzle 143 generating a downward repulsive force. A jet stream is adapted to be selectively ejected out of the first nozzle 142 or the second nozzle 143.

Furthermore, the aircraft can include a valve 144. When the jet stream is ejected out of one of the first nozzle 142 and the second nozzle 143, the valve 142 closes the other of the first nozzle 142 and the second nozzle 143.

Although specific embodiments have been illustrated and described, numerous modifications and variations are still possible without departing from the scope of the invention. The scope of the invention is limited by the accompanying claims.

## Claims

1. An aircraft comprising a fuselage and a pair of symmetric fixed wings, wherein the fuselage includes a head and a tail spaced from the head along a longitudinal axis, wherein each of the pair of symmetric fixed wings extends along a lateral axis perpendicular to the longitudinal axis, wherein the fuselage further includes a top and a bottom spaced from the top along a vertical axis perpendicular to the longitudinal axis and the lateral axis, wherein each of the pair of symmetric fixed wings includes a first propelling mechanism mounted thereto, each first propelling mechanism is operable to pitch about the lateral axis together with one of the pair of symmetric fixed wings or to pitch independently about the lateral axis, wherein a simple control device is mounted along the longitudinal axis between a center of gravity of the fuselage and the tail, wherein the simple control device is configured to generate a resistance to a torque between the center of gravity of the fuselage and the head, and wherein the simple control device is selectively operable to generate an upward or downward control torque.

2. The aircraft as claimed in claim 1, wherein each first propelling mechanism is a rotor, a propeller, a turbo jet, a turbo fan, or a ducted fan.

3. The aircraft as claimed in claim 2, wherein the center of gravity of the fuselage is located on an imaginary line passing through propelling centers of the first propelling mechanisms in a vertical takeoff and landing mode.

4. The aircraft as claimed in claim 2, wherein each of the pair of symmetric fixed wings further includes a second propelling mechanism mounted thereto, wherein the center of gravity of the fuselage is located on an imaginary line passing through overall propelling centers of the first propelling mechanisms and the second propelling mechanisms in a vertical takeoff and landing mode.

5. The aircraft as claimed in claim 1, wherein the simple control device is embedded in a longitudinal portion of the fuselage adjacent to the tail and is intercommunicated with an outside.

6. The aircraft as claimed in claim 1, wherein the simple control device includes an impeller having adjustable blades, wherein the adjustable blades are adjustable in angle to generate an upward repulsive force or a downward repulsive force.

7. The aircraft as claimed in claim 1, wherein the simple control device includes two impellers respectively generating an upward repulsive force and a downward repulsive force.

8. The aircraft as claimed in claim 1, wherein the simple control device includes a first nozzle generating an upward repulsive force and a second nozzle generating a downward repulsive force, and a jet stream is adapted to be selectively ejected out of the first nozzle or the second nozzle.

9. The aircraft as claimed in claim 8, further comprising a valve, wherein when the jet stream is ejected out of one of the first nozzle and the second nozzle, the valve closes another of the first nozzle and the second nozzle.
